# EUROPEAN PATENT APPLICATION

(11) **EP 2 618 606 A2**
(43) Date of publication of application: **24.07.2013**
(21) Application number: 13151993.6
(22) Date of filing: 21.01.2013
(51) Int. Cl.: H04W 36/00, H04W 56/00

(54) **Method of reference cell change**

(30) Priority: 20.01.2012 US 201261588997 P; 23.03.2012 US 201261615032 P; 30.03.2012 US 201261617681 P; 20.04.2012 US 201261635868 P; 18.01.2013 US 201313744428
(71) Applicant: Acer Incorporated, New Taipei City 221 (TW)
(72) Inventor: Ye, Shiang-Rung, 221 New Taipei City (TW)
(74) Representative: Becker Kurig Straus

(57) **Abstract**

A method of reference cell change for a network in a wireless communication system is disclosed. The method comprises utilizing a command for the reference cell change, wherein the command is sent on a cell for indicating the cell as a reference cell.

## Description

### Field of the Invention

The application relates to a method utilized in a wireless communication system, and more particularly, to a method of reference cell change in a wireless communication system.

### Background of the Invention

Toward advanced high-speed wireless communication system, such as transmitting data in a higher peak data rate, LTE-Advanced system is standardized by the 3rd Generation Partnership Project (3GPP) as an enhancement of Long-Term Evolution (LTE) system. LTE-Advanced system targets faster switching between power states, improves performance at the cell edge, and includes subjects, such as bandwidth extension, coordinated multipoint transmission/reception (COMP), uplink multiple input multiple output (MIMO), etc.

For bandwidth extension, carrier aggregation is introduced to the LTE-Advanced system for extension to wider bandwidth, where two or more component carriers are aggregated, for supporting wider transmission bandwidths (for example up to 100MHz) and for spectrum aggregation. According to carrier aggregation capability, multiple component carriers are aggregated into overall wider bandwidth, where a user equipment (UE) can establish multiple links corresponding to the multiple component carriers for simultaneously receiving and transmitting. In carrier aggregation, the UE only has one radio resource control (RRC) connection with the network. At RRC connection establishment/re-establishment/handover, one serving cell provides the Non-Access Stratum (NAS) mobility information, and at RRC connection re-establishment/handover, one serving cell provides the security input. This cell is referred to as a primary cell (PCell). In the downlink, the component carrier corresponding to the PCell is the Downlink Primary Component Carrier (DL PCC) while in the uplink it is the Uplink Primary Component Carrier (UL PCC). In addition, cells other than the PCell are named secondary cell (SCell).

Since the UE may not need to use all of the configured cells (i.e. PCell and one or more SCells), only some SCells are activated, so as to save UE power. Note that, the PCell is always activated. Generally, an evolved Node-B (eNB) activates or deactivates a SCell by sending a signalling (e.g. a medium access control control element (MAC CE), or Activation/Deactivation command) to the UE. In addition, the UE starts a deactivation timer for a SCell when the SCell is activated, wherein the SCell is deactivated when the deactivation timer expires. In other words, the deactivation timer provides a period of time for SCell activation. Please note that, when the SCell is deactivated, the UE does not need to monitor physical downlink control channel (PDCCH) of the deactivated SCell. Further, the UE shall not transmit on UL-SCH on the deactivated SCell.

As abovementioned, it is possible to configure a UE of a PCell and one SCell or more SCells. Therefore, multiple timing advance values, each for synchronization with a serving eNB on uplink timing for preventing signals transmitted from the UE from colliding with those sent from other UEs under the coverage of the eNB, are needed for PCell and SCell or more SCells. Note that, serving cells having uplink to which the same timing advance value applies are grouped in a timing advance group (TAG). Each TAG contains at least one serving cell with configured UL, and the mapping of each serving cell to a TAG is configured by the serving eNB. In order to realize uplink timing alignment, the UE maintains a time alignment timer (TAT) whose running state indicates that uplink transmission is still synchronized. TAT may be applied for a TAG.

In carrier aggregation, a UE may apply information (i.e. parameter settings) to one cell by referring to the information observed from other cell, which is called reference cell in this disclosure. For example, the reference cell may be a timing reference cell. For the timing reference cell, if a UE uses the downlink timing of Cell #x as the timing reference for the Cell #y to derive an uplink transmission timing, then call Cell #x is the timing reference cell of the Cell #y.

However, specification of LTE-Advanced system does not clearly define reference cell change. Thus, the network or the UE does not know how to configure or change a reference cell.

### Summary of the Invention

This in mind, the application aims at providing a method of reference cell change in a wireless communication system in order to solve the abovementioned problems.

This is achieved by a method of reference cell change according to claims 1 and 5. The dependent claims pertain to corresponding further developments and improvements.

As will be seen more clearly from the detailed description following below, the claimed method of reference cell change for a network in a wireless communication system comprises utilizing a command for the reference cell change, wherein the command is sent on a cell for indicating the cell as a reference cell.

### Brief Description of the Drawings

Fig. 1 illustrates a schematic diagram of an exemplary wireless communication system.
Fig. 2 illustrates a schematic diagram of an exemplary communication device.
Fig. 3 is a flowchart of an exemplary process.
Fig. 4 is a flowchart of an exemplary process.

### Detailed Description

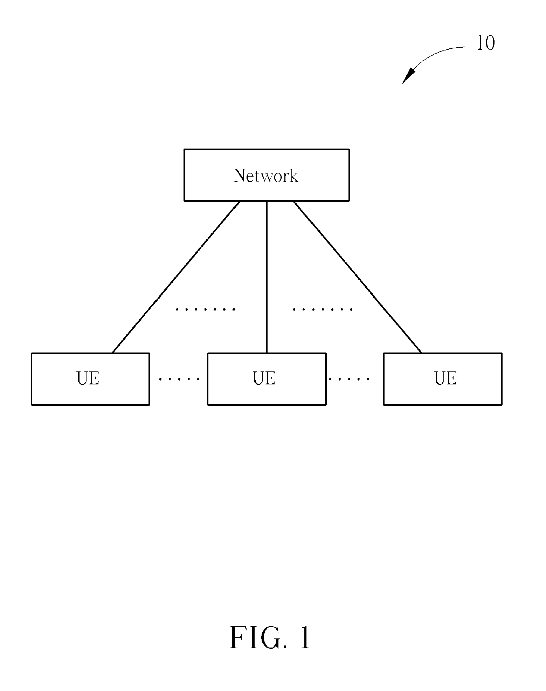

Please refer to Fig. 1, which is a schematic diagram of a wireless communication system 10. The wireless communication system 10 is a Long-Term Evolution advanced (LTE-Advanced) system or other mobile communication systems, and is briefly composed of a network and a plurality of user equipments (UEs). In Fig. 1, the network and the UEs are simply utilized for illustrating the structure of the wireless communication system 10. Practically, the network may be an evolved universal terrestrial radio access network (E-UTRAN) comprising a plurality of evolved base stations (eNBs). The UEs can be devices such as mobile phones, computer systems, a camera, a television, a hand-held video game device, a musical device, a wireless sensor, etc. In some applications, a UE may be a fixed computing device operating in a mobile environment, such as a bus, a train, an airplane, a boat, a car, etc. Besides, the network and the UE can be seen as a transmitter or receiver according to transmission direction, e.g., for uplink (UL), the UE is the transmitter and the network is the receiver, and for downlink (DL), the network is the transmitter and the UE is the receiver.

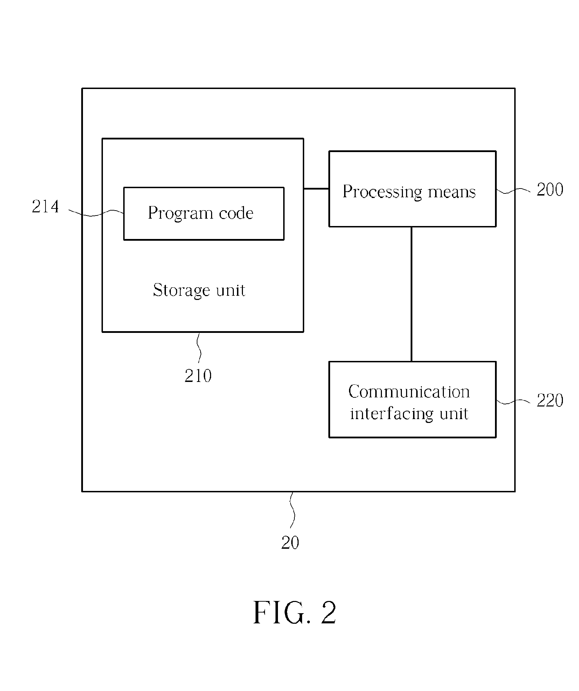

Fig. 2 illustrates a schematic diagram of an exemplary communication device 20. The communication device 20 can be the UE shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

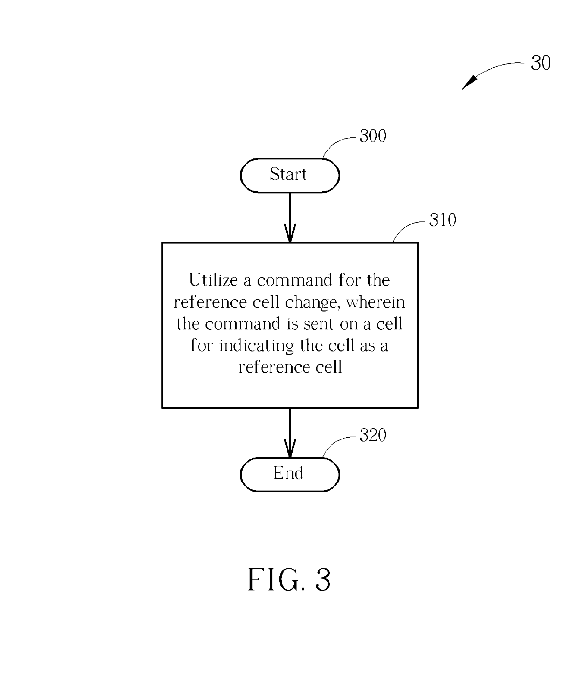

Please refer to Fig. 3, which illustrates a flowchart of an exemplary process 30. The process 30 is utilized in the network (i.e. an eNB) for reference cell change. The process 30 can be compiled into the program code 214 and includes the following steps:
Step 300: Start.
Step 310: Utilize a command for the reference cell change, wherein the command is sent on a cell for indicating the cell as a reference cell.
Step 320: End.

According to the process 30, the eNB designates a cell as the reference cell with a command sent on the cell. The command maybe a timing advance command. For example, if the eNB send a timing advance command to a cell of a timing advance group (TAG), the cell is determined to be a timing reference cell of the timing advance group for the UE. In addition, after the UE changes to the new timing reference cell, a deactivation timer for the new timing reference cell is started/restarted by the network.

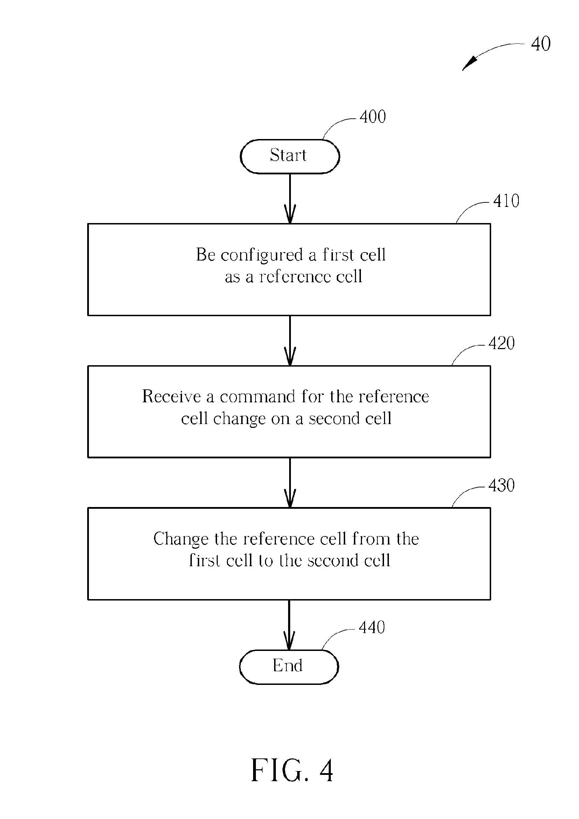

Please refer to Fig. 4, which illustrates a flowchart of an exemplary process 40. The process 40 is utilized in the UE for reference cell change. The process 40 can be compiled into the program code 214 and includes the following steps:
Step 400: Start.
Step 410: Be configured a first cell as a reference cell.
Step 420: Receive a command for the reference cell change on a second cell.
Step 430: Change the reference cell from the first cell to the second cell
Step 440: End.

According to the process 40, when the current reference cell is the first cell, and the UE receives the command for the reference cell change on the second cell, the UE changes reference cell from the first cell to the second cell. The command may be a timing advance command. For example, if the current timing reference cell is cell A, and the UE receives a timing advance command on cell B, the UE changes the timing reference cell from cell A to cell B. Note that, after the UE changes to the cell B, a deactivation timer for the cell B is started/restarted.

In conclusion, the present invention provides methods for reference cell change. A timing advance command sent on a cell is used for indicating the cell as the reference cell.

## Claims

1. A method of reference cell change for a network in a wireless communication system, **characterized by** the method comprising:
utilizing a command for the reference cell change, wherein the command is sent on a cell for indicating the cell as a reference cell (310).

2. The method of claim 1, **characterized in that** the reference cell is a timing reference cell.

3. The method of claim 1, further comprising:
starting or restarting a deactivation timer for the indicated cell after a communication device of the wireless communication system changes the reference cell to the indicated cell.

4. The method of claim 1, **characterized in that** the command is a timing advance command.

5. A method of reference cell change for a mobile device in a wireless communication system, **characterized by** the method comprising:
being configured a first cell as a reference cell (410);
receiving a command for the reference cell change on a second cell (420); and
changing the reference cell from the first cell to the second cell (430).

6. The method of claim 5, **characterized in that** the reference cell is a timing reference cell.

7. The method of claim 5, further comprising:
starting or restarting a deactivation timer for the second cell after the mobile device changes the reference cell to the second cell.

8. The method of claim 5, **characterized in that** the command is a timing advance command.
